# EUROPEAN PATENT APPLICATION

(11) **EP 4 372 045 A1**
(43) Date of publication of application: **22.05.2024**
(21) Application number: 22855801.1
(22) Date of filing: 27.07.2022
(51) Int. Cl.: C08L 21/02, A41D 19/00, A41D 19/04, B29C 41/14, C08J 5/02, C08K 3/22, C08K 5/54, C08K 9/02, C08L 13/02

(54) **LATEX COMPOSITION FOR DIP MOLDING, AND METHOD FOR PRODUCING DIP-MOLDED ARTICLE**

(30) Priority: 13.08.2021 JP 2021131985
(71) Applicant: BST Specialty Co., Ltd., Sathorn, Bangkok, 10120 (TH); Ota, Hisanori, Sathorn, Bangkok 10120 (TH)
(72) Inventor: OTA, Hisanori, Thungmahamek, Sathorn, Bangkok 10120 (TH)
(74) Representative: Isarpatent
(86) International application number: PCT/JP2022/029033
(87) International publication number: WO 2023/017738

(57) **Abstract**

Provided is a latex composition for dip molding that includes a polymer, inorganic particles, and a silane coupling agent, the inorganic particles being alumina, or titanium oxide that has a surface on which at least one of silica, zirconia, and alumina is located, and provided is also a method for producing a dip-molded article.

## Description

### CROSS-REFERENCE TO RELATED APPLICATION

This application claims priority to Japanese Patent Application No. 2021-131985, the disclosure of which is incorporated herein by reference in its entirety.

### FIELD

The present invention relates to a latex composition for dip molding, and a method for producing a dip-molded article. More specifically, the present invention relates to a latex composition for dip molding suitably usable for producing a glove, a condom, a catheter, a tube, a balloon, a nipple, a sack, or the like, and a method for producing such a dip-molded article.

### BACKGROUND

A dip-molded article such as a glove, a condom, a catheter, a tube, a balloon, a nipple, or a sack obtained by dip molding of a latex composition is known. Such a dip-molded article is obtained by molding a natural rubber latex composition or a synthetic rubber latex composition. Nevertheless, a problem has been reported on the natural rubber latex composition in case of use for products that may come into direct contact with a human body because a protein contained in the natural rubber latex composition causes allergic symptoms in the human body. Therefore, the use of a dip-molded article obtained by molding a synthetic rubber latex composition being less harmful to the human body has been on the increase in recent years.

Regardless of whether or not a dip-molded article is made of the natural rubber latex composition or the synthetic rubber latex composition, delayed allergic symptoms caused by a remaining chemical substance of a dip-molded article produced by using a chemical substance that causes irritation to the human body is a problem in recent years. For example, a crosslinking agent, a crosslinking accelerator, or the like is blended in a rubber latex composition for the purpose of improving durability, elasticity, and flexibility of the dip-molded article, but thiazole, thiuram, and carbamate used as such a crosslinking accelerator trigger the IV-type delayed anaphylaxis (allergy). In order to address these problems, there is a demand for a method for producing a dip-molded article less likely to cause allergic symptoms due to the inclusion of a chemical substance.

For example, Patent Literature 1 discloses a dip molding method for producing a prophylactic article such as a glove, in which carboxylated diene latex is cross-linked with modified particles formed by fixing a crosslinking agent such as a silane coupling agent on inorganic particles, for example, silicate-based particles such as calcium silicate particles. This method produces the bond formation between the inorganic particles and an organic polymer, which can suppress the elution of the crosslinking agent, which has been bound on the inorganic particles, from the produced article. Thus, it is possible to prevent the crosslinking agent from coming into contact with the wearer's skin, thereby reducing the possibility to cause allergic symptoms.

### CITATION LIST

### Patent Literature

Patent Literature 1: JP 2019-512572 A

### SUMMARY

### Technical Problem

Nevertheless, in some cases, inorganic particles are included in a latex composition for various purposes, and in the method of Patent Literature 1, silicate-based particles are additionally blended for the purpose of crosslinking, which result in the increase of the content of the inorganic particles in the produced dip-molded article. Therefore, when the dip-molded article is stretched, macrovoids likely occur, which causes a problem of the reduction in the physical strength or durability of the dip-molded article. Further, there is another problem that the produced dip-molded article has reduced rubber elasticity and flexibility, and causes decline in soft feeling and touch.

In view of the above problems, it is an object of the present invention is to provide a latex composition for dip molding capable of improving an obtained dip-molded article in terms of physical characteristics such as physical strength, durability, and flexibility, and provide a method for producing a dip-molded article.

### Solution to Problem

Focusing on alumina and titanium oxide used for adjusting color tone or used as white pigment in a latex composition for dip molding, the present inventors found to accomplish the aforementioned object by a method of causing an organic polymer to be cross-linked with the inorganic particles by covalent bonding, and finally achieved the present invention.

That is, the present invention is a latex composition for dip molding, including a polymer, inorganic particles, and a silane coupling agent, the inorganic particles being alumina, or titanium oxide that has a surface on which at least one of silica, zirconia, and alumina is located.

Also, the present invention is a method for producing a dip-molded article, including: producing a dip-molded article by subjecting the latex composition for dip molding to dip molding.

### DESCRIPTION OF EMBODIMENTS

Hereinafter, a latex composition for dip molding and a method for producing a dip-molded article according to an embodiment of the present invention will be described. Nevertheless, the following embodiment is nothing but an example. The present invention is not limited to the following embodiment at all.

The latex composition for dip molding of the present invention includes a polymer, inorganic particles, and a silane coupling agent. The latex composition for dip molding of the present invention is an emulsion including, in addition to the polymer and the inorganic particles, a liquid serving as a dispersion medium of these components. Here, the inorganic particles included in the latex composition for dip molding is alumina, or titanium oxide that has a surface on which at least one of silica, zirconia, and alumina is located.

Conventionally, titanium oxide is blended in many latex compositions as white pigment, and alumina is also sometimes blended as a color tone adjuster. In the present invention, alumina or titanium oxide playing such a role in the latex composition is allowed to function as a crosslinking agent that can be covalently bonded with a polymer, in addition to the existing functions. Thereby, in the production of the dip-molded article, a wide variety of effects to be described later can be produced.

1. The covalent bonding between the inorganic particles and the polymer can suppress the occurrence of macrovoids that can be generated when the dip-molded article is stretched. Thereby, the physical strength and the durability of the dip-molded article can be greatly improved.
2. The amount of the blended zinc oxide conventionally used as a crosslinking agent can be greatly reduced by allowing titanium oxide or alumina particles conventionally used only as white pigment or color tone adjuster to function as a crosslinking agent. Thereby, the amount of the inorganic particles included in the dip-molded article can be reduced. Zinc oxide does not form a network with a cross-linked polymer, while functioning for causing the polymer to be cross-linked. On the other hand, in the present invention, titanium oxide or alumina is covalently bonded with a polymer. Therefore, in the present invention, a large portion of inorganic particles present in the dip-molded article can be used together with the polymer for the formation of a network. In the present invention, the covalent bonding of the inorganic particles with the polymer can suppress the occurrence of macrovoids when the dip-molded article is stretched. Thereby, the fatigue durability, the water resistance, the solvent resistance, and the physical strength of the dip-molded article can be greatly improved. Further, it is possible to drastically reduce the amount of an eluted substance from the dip-molded article. The idea of utilizing together with the polymer a large portion of the inorganic particles used in the blending for formation of the network has been is first suggested by the present invention. According to this idea, the present invention can enable to drastically suppress the occurrence of microvoids compared with the prior art such as Patent Literature 1.
3. The distance between the cross-linking point of one polymer chain and the cross-linking point of another polymer chain is increased by crosslinking of the polymer with a composite of the inorganic particles and the silane coupling agent. Therefore, the flexibility and the stretchability of the obtained dip-molded article can be greatly improved to impart soft feeling and touch to the dip-molded article.

### <Polymer>

A polymer included in the latex composition for dip molding of the present invention is any polymer stably dispersible in the latex composition for dip molding. As a dispersion medium, an aqueous solvent (e.g., water, alcohol, and alcohol aqueous solution) can be preferably used in the latex composition for dip molding of the present invention. The polymer when dispersed in such an aqueous solvent does not float or precipitate in a short time. Examples of such a polymer include polyisoprene rubber, carboxylated nitrile butadiene rubber (carboxylated NBR), carboxylated styrene butadiene rubber (carboxylated SBR), natural rubber, and chloroprene rubber.

The polymer included in the latex composition for dip molding of the present invention can include, for example, as a structural unit for forming the polymer, a structural unit derived from an ethylenically unsaturated carboxylic acid monomer, a structural unit derived from a conjugated diene monomer, a structural unit derived from an ethylenically unsaturated nitrile monomer, and/or a structural unit derived from another monomer.

The polymer included in the latex composition for dip molding of the present invention is preferably a polymer having a structural unit derived from an ethylenically unsaturated carboxylic acid monomer. The ethylenically unsaturated carboxylic acid monomer is not particularly limited as long as it has an ethylenically unsaturated bond and a carboxyl group or a salt thereof. Examples of the ethylenically unsaturated carboxylic acid monomer include acrylic acid, methacrylic acid, itaconic acid, maleic acid, fumaric acid, maleic anhydride, citraconic anhydride, and salts thereof. Among them, acrylic acid, methacrylic acid and salts thereof are preferable. One of these ethylenically unsaturated carboxylic acid monomers can be used, or two or more of these ethylenically unsaturated carboxylic acid monomers can be used in combination. Examples of the salt of the aforementioned ethylenically unsaturated carboxylic acid monomers include: a monovalent metal salt of an alkali metal or the like such as sodium and potassium; a bivalent metal salt of an alkaline-earth metal such as magnesium and calcium; an ammonium salt; and an organic amine salt.

The aforementioned polymer preferably has a structural unit derived from an ethylenically unsaturated carboxylic acid monomer in the case where, in particular, the inorganic particles include alumina on the surface, that is, in the case where the inorganic particles are alumina or titanium oxide including alumina on the surface. In this case, an Al³⁺ positive charge can be imparted to the surface of the inorganic particles. Such inorganic particles can attract the polymer having a structural unit derived from a carboxylic acid monomer with a negative charge. Consequently, an ionic bond of the positive charge on the particle surface and the negative charge of the polymer is generated. The polymer is covalently bonded with the surface of inorganic particles via the silane coupling agent by a heat energy applied in a subsequent dip-molding step. In this manner, the reaction between the polymer and the surface of inorganic particles can be efficiently accelerated according to this embodiment. Because of the strong influence of the Al³⁺ positive charge, it is advantageous in terms of maintaining the state where the polymer is attracted on the surface of inorganic particles even when a chemical substance including, for example, Ca²⁺ is added separately in the subsequent dip-molding step.

The polymer included in the latex composition for dip molding of the present invention can have a structural unit derived from a conjugated diene monomer. The conjugated diene monomer is not particularly limited as long as it has a structure with two double bonds separated by one single bond. Examples of the conjugated diene monomer include 1,3-butadiene, isoprene, 2,3-dimethyl-1,3-butadiene, 2-ethyl-1,3-butadiene, 1,3-pentadiene, and chloroprene. One of these conjugated diene monomers can be used, or two or more of these conjugated diene monomers can be used in combination.

The polymer included in the latex composition for dip molding of the present invention can further include a structural unit derived from an ethylenically unsaturated nitrile monomer. This inclusion further improves the dip-molded article in oil resistance, abrasion resistance, and tear strength. The ethylenically unsaturated nitrile monomer is not particularly limited as long as it has an ethylenically unsaturated bond and a nitrile group. Examples of the ethylenically unsaturated nitrile monomer include acrylonitrile, methacrylonitrile, fumaronitrile, α-chloroacrylonitrile, and α-cyanoethyl acrylonitrile. One of these ethylenically unsaturated nitrile monomers can be used, or two or more of these ethylenically unsaturated nitrile monomers can be used in combination.

The polymer included in the latex composition for dip molding of the present invention can have a structural unit derived from a monomer other than the ethylenically unsaturated carboxylic acid monomer, the conjugated diene monomer, and the ethylenically unsaturated nitrile monomer. The other monomer is not particularly limited as long as it can be copolymerized with the aforementioned monomers. Examples of the other monomer include: an ethylenically unsaturated sulfonic acid monomer such as acrylamidopropane sulfonic acid or styrene sulfonic acid; an ethylenically unsaturated carboxylic acid ester monomer such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, monoethyl itaconate, monobutyl fumarate, monobutyl maleate, dibutyl maleate, dibutyl fumarate, ethyl maleate, mono2-hydroxypropyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, dimethylaminoethyl (meth)acrylate, 2-sulfoethyl acrylate, or 2-sulfopropyl methacrylate; an ethylenically unsaturated amide monomer such as (meth)acrylamide, N-methylol (meth)acrylamide, N,N-dimethylol (meth)acrylamide, N-methoxymethyl (meth)acrylamide, or N-propoxymethyl (meth)acrylamide; a vinyl aromatic monomer such as styrene, alkylstyrene, or vinylnaphthalene; fluoroalkyl vinyl ether such as fluoroethyl vinyl ether; vinylpyridine; and non-conjugated diene monomer such as vinyl norbornene, dicyclopentadiene, or 1,4-hexadiene.

In the polymer included in the latex composition for dip molding, the ratio of the structural unit derived from the ethylenically unsaturated carboxylic acid monomer is preferably 0.1 to 20 mass% based on the entire structural units. The aforementioned ratio is more preferably 2 to 10 mass%, still more preferably 3 to 8 mass%. With this configuration, the functional effect of the present invention can be produced more effectively.

In the polymer included in the latex composition for dip molding, the ratio of the structural unit derived from the conjugated diene monomer is preferably 30 to 90 mass% based on the entire structural units. The aforementioned ratio is more preferably 40 to 80 mass%, still more preferably 50 to 78 mass%. With this configuration, the functional effect of the present invention can be produced more effectively.

In the polymer included in the latex composition for dip molding, the ratio of the structural unit derived from the ethylenically unsaturated nitrile monomer is preferably 10 to 50 mass% based on the entire structural units. The aforementioned ratio is more preferably 15 to 45 mass%, still more preferably 20 to 40 mass%. With this configuration, the functional effect of the present invention can be produced more effectively.

In the polymer included in the latex composition for dip molding, the ratio of the structural unit derived from the other monomer is preferably 0 to 10 mass% based on the entire structural units. The aforementioned ratio is more preferably 0 to 5 mass%, still more preferably 0 to 3 mass%.

One of the preferred forms of the present invention is a form in which a content ratio of the structural unit derived from the ethylenically unsaturated carboxylic acid monomer, the structural unit derived from the conjugated diene monomer, and the structural unit derived from the ethylenically unsaturated nitrile monomer, in the polymer included in the latex composition for dip molding, is, for example, 2 to 10/50 to 78/20 to 40 (mass%).

### <Inorganic particles>

The inorganic particles included in the latex composition for dip molding of the present invention can be titanium oxide including at least one of silica, zirconia, and alumina on a surface thereof. The titanium oxide is a compound required to be added as a white pigment in many latex compositions. When an additional function as a crosslinking agent is imparted to the titanium oxide playing such a role, no crosslinking agent is required to be separately added to the latex composition for dip molding. Thereby, the amount of inorganic particles included in the latex composition for dip molding or the dip-molded article can be greatly reduced. The aforementioned titanium oxide can be any one of a rutile-type titanium oxide and an anatase-type titanium oxide, and titanium oxides in both crystalline forms can be included. The rutile-type titanium oxide can be preferably used as the aforementioned titanium oxide.

A surface treatment quantity of silica, zirconia, and alumina in the titanium oxide (i.e., quantity of silica, zirconia, and alumina on a surface of the titanium oxide) is preferably 0.1 to 10 mass% based on 100 mass% of the titanium oxide before being subjected to a surface treatment. With this configuration, the covalent bonding between the polymer and the inorganic particles can be formed more sufficiently. The surface treatment quantity of silica, zirconia, and alumina is preferably 0.5 to 8 mass%, more preferably 1 to 5 mass%. The surface of the titanium oxide can be subjected to only one of silica treatment, zirconia treatment, and alumina treatment, or can be subjected to any combination of these treatments.

Examples of the commercially available product usable as the titanium oxide that is included in the latex composition for dip molding of the present invention and subjected to the alumina surface treatment include TITONE, R-62N manufactured by Sakai Chemical Industry Co., Ltd. (SiO₂-Al₂O₃ surface treatment, average particle size: 0.26 µm, titanium oxide purity: 89%).

Alternatively, the inorganic particles included in the latex composition for dip molding of the present invention can be alumina. Alumina is also a compound to be blended as a color tone adjuster in many latex compositions. By imparting an additional function as a crosslinking agent to the alumina playing such a role, the amount of inorganic particles included in the latex composition for dip molding or the dip-molded article can be greatly reduced.

Examples of the commercially available product usable as the alumina included in the latex composition for dip molding of the present invention include A-50 series, A-50-K manufactured by Showa Denko K.K. (α-crystal grain size: 0.3, average particle size: 1.2 µm, Al₂O₃ purity: 99.1%).

The average particle size of the aforementioned inorganic particles is preferably 0.1 to 3.0 µm. This configuration allows the inorganic particles to be sufficiently dispersed in the latex composition. Such inorganic particles are excellent in scattering a visible light more sufficiently and adjusting the color tone of the latex composition. The average particle size is more preferably 0.1 to 0.5 µm or less. In the case where, for example, titanium oxide is adopted as the inorganic particles, the average particle size is about 0.3 µm. The average particle size of the inorganic particles can be obtained by, for example, laser diffractometry, and determined as a median diameter (D50) on the volumetric basis.

The ratio of the inorganic particles included in the latex composition for dip molding is preferably 0.05 to 10.0 mass%, more preferably 0.2 to 5.0 mass%, still more preferably 0.4 to 3.0 mass%, based on the polymer.

The mixing of the inorganic particles with the other components forming the latex composition for dip molding is preferably made in a dispersion liquid state. As the inorganic particles, for example, a commercially available dispersion liquid can be used. Alternatively, when using the inorganic particles which are not sold in the form of a dispersion liquid, it is possible to use a dispersion liquid of the inorganic particles which can be produced by, for example, the following method. Specifically, 60g of ion exchange water, 1 g of dispersant TAMOL NN9401 (sodium salt polymerized by naphthalenesulfonate and formaldehyde: manufactured by Kao Corporation), 1 g of bentonite, 1.2 g of sodium polyacrylate, and ammonia water are added to 100 g of inorganic particles, and stirred at 250 rpm for 1 hour, to produce a dispersion liquid including the inorganic particles. At this time, a pH of the dispersion liquid is adjusted to about 9 to 11, while a solid content concentration of the dispersion liquid including the inorganic particles is adjusted to about 50 to 62%.

### <Silane coupling agent>

The silane coupling agent used in the present invention is an organosilicon compound having a reactive organic functional group X and an alkoxy group OR. The reactive organic functional group X reacts with the polymer by applying a heat energy, which enables covalent bonding with the polymer. The alkoxy group OR is hydrolyzed to become a silanol group. The silanol group enables hydrogen bonding with the surface of inorganic particles. The formation of the bonding of the silane coupling agent with the polymer and the inorganic particles will be described later in more detail. The number of the reactive organic functional group X is preferably 1 or 2, particularly preferably 1. The number of the alkoxy group OR is preferably 2 or 3, particularly preferably 3.

The type of the silane coupling agent can be appropriately selected depending on the type of polymer to be cross-linked. In the case where, for example, the polymer includes polyisoprene rubber, preferably used as the silane coupling agent are 3-mercaptopropylmethyldimethoxysilane (e.g., KBM-802 manufactured by Shin-Etsu Chemical Co., Ltd.) or 3-mercaptopropyltrimethoxysilane (e.g., KBM-803 manufactured by Shin-Etsu Chemical Co., Ltd.). In the case where the polymer includes carboxylated nitrile butadiene rubber, preferably used as the silane coupling agent are 3-glycidoxypropylmethyldimethoxysilane (e.g., KBM-402 manufactured by Shin-Etsu Chemical Co., Ltd.), 3-glycidoxypropyltrimethoxysilane (e.g., KBM-403 manufactured by Shin-Etsu Chemical Co., Ltd.), and 3-aminopropyltrimethoxysilane (e.g., KBM-903 manufactured by Shin-Etsu Chemical Co., Ltd.), which are highly reactive with a carboxyl group of the polymer chain. One of these silane coupling agents can be used, or two or more of these silane coupling agents can be used in combination.

The silane coupling agent used in the present invention preferably includes an epoxy group, an amino group, and a mercapto group. The mercapto group as the reactive organic functional group X includes a mercapto group protected by, for example, an alkoxysilyl group, or the like.

The ratio of the silane coupling agent included in the latex composition for dip molding is preferably 10 to 500 mass%, more preferably 30 to 200 mass%, based the inorganic particles. The ratio of the silane coupling agent is preferably 0.1 to 5 mass%, more preferably 0.5 to 3 mass%, based on the polymer. In the case where the ratio of the silane coupling agent is excessively high relative to the inorganic particles, there is a concern that the mold used in the dip molding may be contaminated by the silane coupling agent. In the case where the ratio of the silane coupling agent is excessively low relative to the inorganic particles or the polymer, there is a possibility that the covalent bonding between the inorganic particles and the polymer may be insufficient and the improvement of physical characteristics of the dip-molded article may be insufficient.

### <Latex composition for dip molding>

The latex composition for dip molding of the present invention includes the polymer, the inorganic particles, and the silane coupling agent, as described above.

The latex composition herein means a composition in an emulsion state with a polymer dispersed in a solvent. That is, the polymer is included so as to allow the latex composition for dip molding to be in an emulsion state. An aqueous solvent, in particular, water, is used as the solvent. The amount of the solvent is generally 70 to 250 parts by mass, preferably 80 to 170 parts by mass, based on 100 parts by mass of the polymer.

In the latex composition for dip molding, at least a part of alkoxy groups OR of the silane coupling agent is hydrolyzed to become silanol groups, and the silanol groups form hydrogen bonding with the surface of the inorganic particles. The silanol group is used for dehydration condensation with a hydroxyl group existing on the surface of the inorganic particles. This silanol group allows a compound having the reactive organic functional group X (i.e., compound derived from the silane coupling agent) to be covalently bonded with the surface of the inorganic particles. The following is an example schematically showing a bonding state of the inorganic particles and the silane coupling agent of the latex composition for dip molding in the case where the inorganic particles are titanium oxide that is surface-modified by alumina and the silane coupling agent has an epoxy group as the reactive organic functional group X.

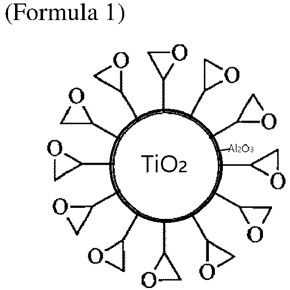

The following is another example schematically showing a bonding state of the inorganic particles and the silane coupling agent of the latex composition for dip molding in the case where the inorganic particles are alumina and the silane coupling agent has an epoxy group as the reactive organic functional group X.

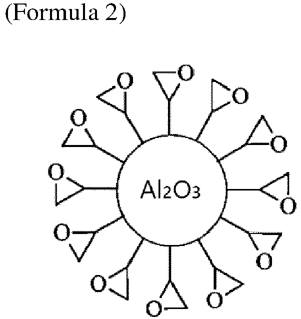

The latex composition for dip molding of the present invention can include a component other than the polymer, the inorganic particles, and the silane coupling agent described above. The other component is not particularly limited. Examples of the other component include a crosslinking agent, a vulcanizing agent, a vulcanization accelerator, a multivalent metal salt, a pH regulator, a surfactant, a pigment, an anti-aging agent, a preservative, a wax, and an inorganic filler. The total content of the other component is preferably 10 mass% or less, more preferably 5 mass% or less, based on 100 mass% of the polymer.

The latex composition for dip molding can further include a metal oxide such as zinc oxide, magnesium oxide, barium oxide, vanadium oxide, chromium oxide, lead oxide, and iron oxide for the purpose of, for example, enhancing the effect of the crosslinking agent, particularly the effect of ionic crosslinking. Nevertheless, these metal oxides are sometimes not blended in the latex composition for dip molding in terms of minimizing the blending amount of the inorganic particles. Thus, it is preferable that the blending amount of the metal oxide be minimized even when being mixed. In the case of being blended, the amount of the metal oxide is preferably 3 parts by mass or less, more preferably 1.5 parts by mass or less, based on 100 parts by mass of the solid content included in the latex composition for dip molding. These metal oxides can be included as a mixture with polyethylene glycol and a hydroxide salt in the latex composition.

It is preferable that the vulcanizing agent or the vulcanization accelerator be not included in the latex composition for dip molding, but can be included if it is of such a small amount as to be able to greatly reduce its harmful effect. The content of each of the vulcanizing agent and the vulcanization accelerator is preferably 5 mass% or less, more preferably 2.5 mass% or less, based on 100 mass% of the polymer. A vulcanizing agent generally used in dip molding can be used as the vulcanizing agent to be added to the latex composition for dip molding, and examples thereof include: sulfur such as powder sulfur, sublimed sulfur, precipitated sulfur, colloidal sulfur, surface-treated sulfur, or insoluble sulfur; and polyamines such as hexamethylenediamine, triethylenetetramine, or tetraethylenepentamine. In particular, sulfur can be used. A vulcanization accelerator generally used in dip molding can be used as the vulcanization accelerator to be added to the latex composition for dip molding, and examples thereof include: dithiocarbamic acid such as diethyldithiocarbamic acid, dibutyldithiocarbamic acid, di-2-ethylhexyldithiocarbamic acid, dicyclohexyldithiocarbamic acid, diphenyldithiocarbamic acid, or dibenzyldithiocarbamic acid, and a zinc salt thereof; 2-mercaptobenzothiazole, 2-mercaptobenzothiazole zinc, 2-mercaptothiazoline, dibenzothiazyl disulfide, 2-(2,4-dinitrophenylthio)benzothiazole, 2-(N,N-diethylthio-carbylthio)benzothiazole, 2-(2,6-dimethyl-4-morpholinothio)benzothiazole, 2-(4'-morpholino-dithio)benzothiazole, 4-morpholinyl-2-benzothiazyl-disulfide, and 1,3-bis(2-benzothiazyl-mercaptomethyl)urea. In particular, dibutyldithiocarbamic acid zinc, 2-mercaptobenzothiazole, 2-mercaptobenzothiazole zinc, or the like can be used. One of these vulcanization accelerators can be used, or two or more of these vulcanization accelerators can be used in combination.

A sedimentation rate of the latex composition for dip molding is preferably 2 ml or less. The sedimentation rate of the latex composition for dip molding can be measured by placing 100 ml of the composition in a graduated cylinder and leaving the same at room temperature of 25 °C for 5 days, followed by visual observation of a total amount of the deposited composition in the bottom of the graduated cylinder.

### <Method for producing a latex composition for dip molding>

The latex composition for dip molding of the present invention can be produced by, for example, adding a crosslinking-agent mixed liquid including the inorganic particles and the silane coupling agent to a latex composition (i.e., polymer latex) in which only the polymer without the inorganic particles and the silane coupling agent is dispersed in an aqueous solvent.

For the production of the latex composition for dip molding of the present invention, the crosslinking-agent mixed liquid is preferably prepared immediately before being added to the polymer latex. The method for producing the latex composition for dip molding is not limited to the aforementioned method, and can be a method for producing the latex composition for dip molding by separately adding a dispersion liquid of the inorganic particles, the silane coupling agent, and the other component individually at appropriate timings to the polymer latex directly.

### (Method for producing a polymer latex)

For the production of the polymer latex, the polymer is produced by polymerizing a monomer component such as an ethylenically unsaturated carboxylic acid monomer, a conjugated diene monomer, and an ethylenically unsaturated nitrile monomer. The method for producing the polymer latex preferably includes a step of polymerizing a monomer component including the ethylenically unsaturated carboxylic acid monomer (hereinafter also referred to as "polymerization step"). Specific examples and preferred examples of the monomer component, and preferred ratios of the monomers are the same as those of the respective structural units.

The polymerization method for the monomer component is not particularly limited, but preferably performed by emulsion polymerization. The emulsifier used for the emulsion polymerization is not particularly limited. Examples of the emulsifier include: a nonionic emulsifier such as polyoxyethylene alkyl ether, polyoxyethylene alkyl phenol ether, polyoxyethylene alkyl ester, or polyoxyethylenesorbitane alkyl ester; an anionic emulsifier such as fatty acid of myristic acid, palmitic acid, oleic acid, linolenic acid, and salts thereof, ester phosphate such as isopropylphosphate or polyoxyethylene alkyl ether phosphate, alkyldiphenyl ether disulfonate, lauryldiphenyloxysulphonate disodium salt, alkylnaphthalenesulfonate, a sodium salt of naphthalenesulfonate formalin condensate, sodium dialkyl sulfosuccinate, alkylbenzene sulfonate, alkylallyl sulfonate, a higher alcohol sulfate ester salt, or alkyl sulfosuccinic acid; and a copolymerizable emulsifier containing a double bond such as sulfone ester of α,β-unsaturated carbonic acid, sulfate ester of α,β-unsaturated carbonic acid, or sulfoalkyl allyl ether. The usage of the emulsifier is not particularly limited, but is 0.1 to 10 parts by mass, preferably 0.5 to 6.0 parts by mass, based on 100 parts by mass of the usage of the monomer (i.e., total monomer). The emulsifiers can be used individually, or two or more of them can be used in combination. The emulsifier can be fed at a time or several times when producing the polymer latex.

An aqueous solvent is preferable as the solvent used in the polymerization step and water is preferable as the aqueous solvent. The usage of the solvent is preferably 70 to 250 parts by mass and more preferably 80 to 170 parts by mass based on 100 parts by mass of the usage of the monomer (i.e., total monomer). The reduction of the stability in the polymerization step can be sufficiently suppressed by setting the usage of the solvent to 70 parts by mass or more. By setting the usage of the solvent to 250 parts by mass or less, the energy and time required for a post-treatment after the latex is formed can be saved, thereby enabling more efficient production of the polymer.

In the polymerization step, a chain transfer agent can be used as a molecular weight regulator of the polymer, as necessary. Examples of the chain transfer agent include mercaptans such as t-dodecyl mercaptan, n-dodecyl mercaptan, or mercaptoethanol, halogenated hydrocarbon such as carbon tetrachloride, methylene chloride, or methylene bromide, and α-methylstyrene dimer. The chain transfer agent is preferably mercaptans such as t-dodecyl mercaptan or n-dodecyl mercaptan.

The usage of the chain transfer agent in the production of the polymer latex is preferably 0.01 to 10 parts by mass, more preferably 0.03 to 5 parts by mass, still more preferably 0.1 to 2 parts by mass, based on 100 parts by mass of the usage of the total monomer.

In the polymerization step, a polymerization initiator is preferably used. The polymerization initiator is not particularly limited. Examples of the polymerization initiator include potassium persulfate, ammonium persulfate, sodium persulfate, perphosphate, hydrogen peroxide, t-butyl hydroperoxide, 1,1,3,3-tetramethylbutylhydroperoxide, p-menthane hydroperoxide, 2,5-dimethylhexane-2,5-dihydroperoxide, diisopropylbenzene hydroperoxide, cumene hydroperoxide, di-t-butylperoxide, di-α-cumyl peroxide, acetyl peroxide, isobutyryl peroxide, benzoyl peroxide, and azobisisobutyronitrile. These polymerization initiators can be used individually, or two or more of them can be used in combination. The usage of the polymerization initiator is not particularly limited, but is preferably 0.001 to 10 parts by mass based on 100 parts by mass of the monomer (i.e., total monomer).

The aforementioned peroxide can be combined with a reductant to be used as a redox polymerization initiator. The reductant is not particularly limited. Examples of the reductant include a compound having a metal ion in a reduced state such as ferrous sulfate or cuprous naphthenate; sulfonates such as sodium methanesulfonate, formaldehyde sulfoxylates such as sodium formaldehyde sulfoxylate; 2-hydroxy-2-sulfonatoacetates such as disodium salt of 2-hydroxy-2-sulfonatoacetate; 2-hydroxy-2-sulfinatoacetates such as disodium salt of 2-hydroxy-2-sulfinatoacetate; amines such asformyldimethylaniline; and ascorbic acid. These reductants can be used individually, or two or more of them can be used in combination. The usage of the reductant is not particularly limited, but the mass ratio relative to the peroxide (peroxide/reductant) is preferably = 0.01 to 100, more preferably 0.1 to 50.

The polymerization reactor used in the polymerization step can be any type reactor, that is, a batch-type, a semi-batch type, or a continuous-type polymerization reactor. The batch-type or the semi-batch type is preferably adopted.

The method of adding the monomer in the polymerization step is not particularly limited. Examples of the method of adding the monomer include a method of adding the monomer to the polymerization reactor at a time, a method of adding the monomer continuously or intermittently in accordance with the progress of the polymerization reaction, and a method of adding a part of the monomer to allow it to reach a certain conversion rate and then adding the remaining monomer continuously or intermittently. Any method can be adopted. As to the monomer to be added, various types of monomers can be mixed beforehand to be used, or can be separately used according to each type. In the case where various types of monomers are mixed, the mixing ratio can be fixed, or can be changed.

The polymerization temperature in the polymerization step is not particularly limited, but is preferably 0 to 100 °C, more preferably 5 to 70 °C.

In the polymerization step, it is preferable that the polymerization reaction be stopped at the time of reaching a certain polymerization conversion rate by cooling the polymerization-based material or adding a polymerization terminator. The polymerization conversion rate at the time of stopping the polymerization reaction is, in general, preferably 90% or more, more preferably 93% or more.

The polymerization terminator is not particularly limited. Examples of the polymerization terminator include nitrite such as sodium nitrite, potassium nitrite, or ammonium nitrite, ascorbic acid, citric acid, hydroxylamine, hydroxylamine sulfate, diethylhydroxylamine, hydroxyamine sulfonic acid and alkali metal salts thereof, 2,2,6,6-tetramethylpiperidinooxyl compound such as 4-benzoyloxy-2,2,6,6-tetramethylpiperidinooxyl, sodium dimethyldithiocarbamate, dimethyldithiocarbamate, hydroquinone derivatives, catechol derivatives, resorcinol derivatives, aromatic hydroxydithiocarboxylic acid such as hydroxydimethylbenzenedithiocarboxylic acid, hydroxydiethylbenzenedithiocarboxylic acid, or hydroxydibutylbenzenedithiocarboxylic acid, and alkali metal salts thereof. The method of adding the polymerization terminator is not particularly limited, but is preferably added as an aqueous solution. The usage of the polymerization terminator is generally 0.01 to 5 parts by mass, preferably 0.03 to 2 parts by mass, based on 100 parts by mass of the total monomer mixture.

In the method for producing the polymer latex, a neutralization step using an alkaline material can be performed, as necessary. As the alkaline material, inorganic salt such as a hydroxide of a monovalent metal or a divalent metal, or carbonate; ammonia; and an organic amine are preferable. After the reaction is finished, the concentration can be adjusted, as necessary. The neutralization step can be performed during the polymerization step, or can be performed after the polymerization step. For example, the polymerization terminator can be added after the alkaline material is added, or can be added simultaneously with the addition of the alkaline material.

After the polymerization step in the method for producing the polymer latex, it is possible to perform an additional step as necessary, such as a step of removing unreacted monomer, a step of adjusting the solid content concentration or the pH, or a step of adding, for example, an auxiliary material for polymerization. The auxiliary material for polymerization is not particularly limited, and can be an organic compound or can be an inorganic compound. Examples of the auxiliary material for polymerization include a deoxidizer, a dispersant, a surfactant, a chelator, a molecular weight modifier, a particle size regulator, an anti-aging agent, a preservative, and an antimicrobial agent.

### (Method for producing a crosslinking-agent mixed liquid)

The crosslinking-agent mixed liquid can be produced by, for example, mixing the silane coupling agent to the dispersion liquid including the inorganic particles (inorganic particles dispersion liquid).

The inorganic particles dispersion liquid preferably include the inorganic particles and a dispersant. Examples of the dispersant include: a sulfonic acid-based dispersant such as a condensate of sodium naphthalenesulfonate and formaldehyde; clay such as bentonite; and a calboxylic acid-based dispersant such as sodium polyacrylate. Two or more of these dispersants can be mixed to be used in combination, as necessary.

The content ratio of the dispersant in the inorganic particles dispersion liquid is preferably 0.5 to 10 parts by mass, more preferably 1.0 to 5 parts by mass based on 100 parts by mass of the inorganic particles.

The solid content concentration of the inorganic particles dispersion liquid is preferably 30 to 85 mass%. The solid content concentration of the inorganic particles dispersion liquid herein can be measured by drying the inorganic particles dispersion liquid and dividing the weight after drying by the weight before drying. The solid content concentration can be measured by using about 8 g of the inorganic particles dispersion liquid. The inorganic particles dispersion liquid can be dried by being put in a petri dish and heated by an oven. The drying conditions can be 105 °C for 1 hour.

The pH of the inorganic particles dispersion liquid is preferably 7 to 11, more preferably 8 to 10.5. The aforementioned pH can be adjusted by, for example, using a basic substance such as ammonia.

The crosslinking-agent mixed liquid can be produced by adding the silane coupling agent into the inorganic particles dispersion liquid. As described above, the addition of the crosslinking-agent mixed liquid to the polymer latex can be made by adding the crosslinking-agent mixed liquid prepared by adding the silane coupling agent to the inorganic particles dispersion liquid, or can be made by separately adding the inorganic particles dispersion liquid and the silane coupling agent.

### <Method for producing a dip-molded article>

The method for producing a dip-molded article of the present invention includes producing a dip-molded article by subjecting the latex composition for dip molding according to the present invention to dip molding. The dip-molded article produced by the method of the present invention is not particularly limited to any application, but can be applied to, for example, a glove, a condom, a catheter, a tube, a balloon, a nipple, a sack, and the like. The preferred application of the method of the present invention is to produce a glove.

The method for producing a dip-molded article of the present invention is not particularly limited, but preferably includes a dip molding step of forming a film on a forming mold by the latex composition for dip molding, and a crosslinking step of crosslinking the polymers, included in the polymer latex, with each other. The dip molding step and the crosslinking step can be simultaneously performed, or can be separately performed in any order.

The dip molding step is not particularly limited. Examples of the dip molding step include a direct immersion method, a coagulation immersion method, an electro-immersion method, and a thermal immersion method. Among them, the direct immersion method and the coagulation immersion method are preferable since the dip-molded article having a uniform thickness is likely to be obtained. In the case of the coagulation immersion method, the performance is preferably made in such a way as that a forming mold is immersed in a coagulant solution to cause the coagulant to adhere to the surface of the mold, and then, the mold is immersed in the latex composition for dip molding, to form a coating film of the latex composition on the surface of the mold.

The coagulant used in the coagulation immersion method can be generally used in the form of a mixture of, for example, a coagulant component, a solvent, a surfactant, a wetting agent, an inorganic filler, and a demolding agent. Examples of the coagulant component include metal halide such as barium chloride, calcium chloride, magnesium chloride, aluminum chloride,or zinc chloride, nitrate such as barium nitrate, calcium nitrate, or zinc nitrate, acetate such as barium acetate, calcium acetate, or zinc acetate, sulfate such as calcium sulfate, magnesium sulfate, or aluminum sulfate, and acids such as acetic acid, sulfuric acid, hydrochloric acid, or nitric acid. Calcium nitrate or calcium chloride is preferably used. These compounds can be used individually, or two or more of them can be used in combination.

Examples of the solvent include water, alcohol, and acids. The surfactant is used for the purpose of causing the coagulant liquid to adhere to the surface of the mold uniformly and facilitating the demolding. Examples of the surfactant include a nonionic surfactant, a metallic soap, and other compounds. Examples of the metallic soap include calcium stearate, ammonium stearate, and zinc stearate. Examples of the inorganic filler include metal oxide, calcium carbonate, and talc.

The crosslinking step is a step of crosslinking polymers, included in the dip-molded article, with each other. The crosslinking step can include, for example, an aging step of aggregating polymers by, for example, adding a stabilizer, a reactor, and a crosslinking agent to the latex composition, or performing heat treatment, stirring, aging, filtering, or the like. Alternatively, the crosslinking step can be a crosslinking step in which a pre-vulcanization step and a dip molding step are simultaneously performed. The crosslinking step can be a crosslinking step performed after the dip molding step. The crosslinking step can be performed in various ways depending on the required performance for the dip-molded article.

In the method of the present invention, it is preferable that polymers be cross-linked with each other without using, for example, a vulcanizing agent such as sulfur, a vulcanization accelerator, and zinc oxide, but these chemical substances can be used, as necessary. The usage of these chemical substances is preferably remained within the range causing no harmful effects.

In the method of the present invention, the covalent bonding is caused between the inorganic particles and the polymer by means of the combination of the inorganic particles and the silane coupling agent. The method of the present invention enables crosslinking between polymers via the inorganic particles onto which the silane coupling agent are covalently bonded. Specifically, the alkoxy group of the silane coupling agent is hydrolyzed to become silanol and forms a hydrogen bond with the hydroxyl group existing on the surface of the inorganic particles. This hydrogen bond is heated to be dehydrated and condensed to cause covalent bonding. A primer is formed by the covalent bonding of the inorganic particles with the silane coupling agent. This primer has a reactive organic functional group X at a terminal and this functional group X reacts with an organic polymer to cause covalent bonding. Through this process, the inorganic particles are covalently bonded with an organic polymer network of the dip-molded article to be produced. That is, according to the present invention, it has been found that the formation of one network by the inorganic particles and the organic polymers improves the physical characteristics of the dip-molded article to be produced. The degree of covalent bonding of the inorganic particles with the organic polymer network is calculated using an index of reactivity because of the difficulty in the accurate measurement.

The following is an example schematically showing a process in which a polymer having a structural unit derived from the ethylenically unsaturated carboxylic acid monomer is cross-linked by the inorganic particles in the case where the inorganic particles are titanium oxide that is surface-modified by alumina and the silane coupling agent has an epoxy group as the reactive organic functional group X.

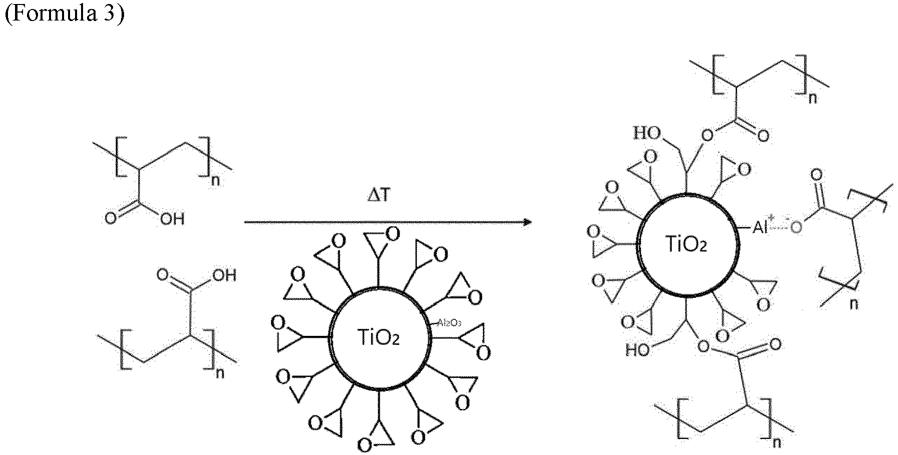

The following is another example schematically showing a process in which a polymer having a structural unit derived from the ethylenically unsaturated carboxylic acid monomer is cross-linked by the inorganic particles in the case where the inorganic particles are composed alumina and the silane coupling agent has an epoxy group as the reactive organic functional group X.

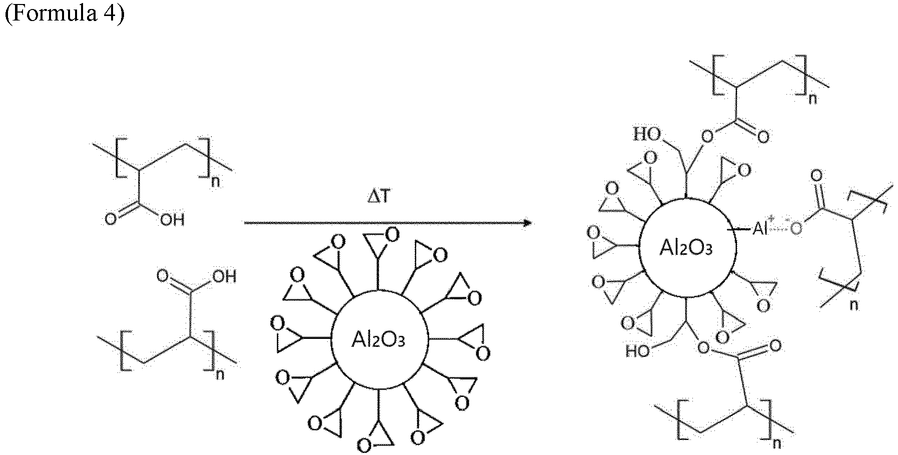

In the method of the present invention, in addition to the aforementioned crosslinking, bonds between carboxyl groups via ionic bonds with, for example, Ca²⁺, Zn²⁺, and Al³⁺ existing in the system can be formed.

The following is an example of the steps for producing a dip-molded article from the latex composition for dip molding.
(1) Step of washing, drying at 50 to 100 °C, and preheating a forming mold.
(2) Step of immersing the forming mold in a coagulant solution including calcium ions or the like, then taking it out and drying it, and causing the coagulant to adhere onto the surface of the forming mold and drying it.
(3) Step of immersing the forming mold, onto which the coagulant is caused to adhere in (2), in the latex composition for dip molding, and then taking it out, to gel the latex composition for dip molding.
(4) Step of performing a leaching treatment to the dip-molded article gelled in (3), with water or hot water of 30 to 80 °C and removing impurities and inessentials.
(5) Pre-curing step of performing a heat treatment to the molded article at a temperature of 60 to 150 °C for about 1 to 120 minutes and accelerating the drying of the dip-molded article; and curing step of accelerating the solidification and the crosslinking reaction of the dip-molded article.
(6) Step of performing a blocking prevention treatment to the dip-molded article, as necessary.
(7) Step of detaching the dip-molded article from the forming mold.

The order to perform the above (4) to (7) can be changed, as necessary.

In the case where the inorganic particles include alumina on the surface, that is, the inorganic particles are alumina or titanium oxide that includes alumina on the surface, and the polymer includes a structural unit derived from the ethylenically unsaturated carboxylic acid monomer, Al³⁺ ion is ionized on the surface of the inorganic particles. Therefore, an electrical binding force acts between the inorganic particles and the polymer. This action is unlikely to be lost even in existence of a large amount of coagulant including calcium ion used for gelation in the above (2) and (3).

Examples of the blocking prevention treatment include a chlorination treatment method by immersing the dip molded article in an aqueous solution in which sodium hypochlorite and hydrochloric acid are mixed or by treating the dip molded article in a chlorine gas chamber, a polymer coating method by coating a polymer having blocking prevention properties on the molded article, and a slurry method by immersing the dip molded article in an aqueous solution including a lubricant component. Any method can be performed. The blocking prevention treatment can be performed after detaching the dip-molded article from the mold.

As described above, the latex composition for dip molding of the present invention includes a polymer, inorganic particles, and a silane coupling agent, the inorganic particles being alumina, or titanium oxide that has a surface on which at least one of silica, zirconia, and alumina is located. Thus, it is possible to improve the obtained dip-molded article in terms of physical characteristics such as physical strength, durability, and flexibility. Also, according to the method for producing a dip-molded article of this embodiment, it is possible to provide a dip-molded article of which physical characteristics such as physical strength, durability, and flexibility are improved.

The latex composition for dip molding and the method for producing a dip-molded article according to the present invention are not limited to the configuration of the aforementioned embodiment. Further, the latex composition for dip molding and the method for producing a dip-molded article according to the present invention are not limited to those having the aforementioned operational effects. Various modifications can be made to the latex composition for dip molding and the method for producing a dip-molded article according to the present invention without departing from the gist of the present invention.

Although detailed description beyond the above will not be repeated here, conventionally known technical matters on the latex composition for dip molding and the method for producing a dip-molded article can be optionally employed in the present invention even if the matters are not directly described in the above.

### Examples

Hereinafter, the present invention will be elucidated by way of specific examples, but is not limited only to these examples. Unless otherwise noted, "parts" means "parts by mass" and "%" means "mass%".

### 1. Production of a latex composition for dip molding and a dip-molded article

The following raw materials were used in producing the latex composition for dip molding and the dip-molded article of each of Examples and Comparative Examples.

### A. Polymer

- Polyisoprene latex: manufactured by BST Specialty Co., Ltd., BSTS-IRL701
- NBR latex: produced by mixing monomers of butadiene, acrylonitrile, and methacrylic acid at a certain ratio, and polymerizing the mixture for each example.

### B. Inorganic particles

· Aluminum oxide: manufactured by Showa Denko K.K., fine alumina A-50K
· SiO₂-Al₂O₃ surface-treated titanium oxide: manufactured by Sakai Chemical Industry Co., Ltd., TITONE R-62N
· Surface-untreated titanium oxide: manufactured by Sakai Chemical Industry Co., Ltd., SA-1

### C. Silane coupling agent

· 3-Glycidoxypropyltrimethoxysilane: manufactured by Shin-Etsu Chemical Co., Ltd., KBM-403
· 3-Glycidoxypropylmethyldimethoxysilane: manufactured by Shin-Etsu Chemical Co., Ltd., KBM-402
· 3-Mercaptopropyltrimethoxysilane: manufactured by Shin-Etsu Chemical Co., Ltd., KBM-803

### (Examples 1 to 7)

### • Preparation of a latex composition for dip molding

Nitrogen substitution was performed inside a pressure resistant autoclave having a stirring device. In this pressure resistant autoclave, 100 parts by mass of raw materials of the polymer component (A) in the type and the blending amount shown in Table 1, 0.6 parts by mass of a polymer modifier (TDM: t-dodecyl mercaptan), 150 parts by mass of soft water, 2.5 parts by mass of an anionic emulsifier (SDBS: sodium dodecylbenzenesulfonate), and 0.3 parts by mass of potassium persulfate (KPS) as a polymerization initiator were introduced. The mixture was reacted for 15 hours under stirring and with a polymerization temperature maintained at 50 °C. After the polymerization conversion rate was confirmed to reach 98%, a pH regulator and a polymerization terminator were added to the inside of the pressure resistant autoclave to finish the polymerization reaction. After unreacted monomers were removed under reduced pressure from the obtained NBR latex composition, the pH and the concentration of the NBR latex composition were adjusted to have a solid content concentration of 45% and a pH of 8.0 by adding a potassium hydroxide aqueous solution. Thereafter, 0.3 parts by mass (in terms of solid content) of aqueous dispersion (manufactured by AKRON DISPERSIONS, Bostex 362) of a butylated reaction product of p-cresol and dicyclopentadiene as an anti-aging agent was added to 100 parts by mass (in terms of solid content) of the NBR latex composition.

Subsequently, the pH and the concentration of the NBR latex composition were adjusted to have a solid content concentration in the range of 17 to 20% and have a pH in the range of 9.5 to 10 by adding 3% of potassium hydroxide aqueous solution and soft water to the NBR latex composition under stirring. Subsequently, a dispersion liquid including the inorganic particles (B) in the type and the blending amount shown in Table 1, a silane coupling agent in the type and the blending amount shown in Table 1, and a zinc oxide dispersion liquid (manufactured by Aquaspersions Ltd.) in the blending amount shown in Table 1 as necessary were added to 100 parts by mass (in terms of solid content) of the NBR latex composition, and stirred at room temperature for 12 hours. Thereafter, aggregates and bubbles were removed from the obtained NBR latex composition, and the temperature of the NBR latex composition was adjusted to 20 to 40 °C. Thereby, the latex composition for dip molding was obtained.

### • Production of a dip-molded article

An immersed hand mold made of ceramic, which has been washed and heated, was immersed in a coagulant composed of a mixed aqueous solution of 14 mass% of calcium nitrate and 1.5 mass% of calcium stearate, and then dried at 70 °C for 3 minutes, to cause the coagulant to adhere to the hand mold. This hand mold with the coagulant adhered thereto was immersed in the latex composition for dip molding for 30 to 60 seconds and taken out, and then, the taken-out hand glove was heated at 80 °C for 1 minute, thereby producing a thin film with the latex composition gelled on the hand mold. Thereafter, the hand mold was subjected to a leaching treatment by immersing the hand mold in hot water of 60 to 70 °C for 3 minutes, then left in a test oven and heated at 70 °C for 5 minutes, and still left in the oven to be subjected to an additional heat treatment at 130 °C for 20 minutes.

After the hand mold was cooled to have a surface temperature of 40 °C, the hand mold was immersed for 40 seconds in a chlorinated immersion tank that stores a liquid adjusted to have an active chlorine concentration of 900 to 1000 ppm by sodium hypochlorite and hydrochloric acid. The taken-out hand mold was washed with water, washed with a 0.4% sodium sulfate aqueous solution, and washed with water again. Thereafter, the hand mold was dried at 100 °C for 5 minutes, and sufficiently cooled at room temperature, and the polymer molded article formed on the surface of the hand mold was demolded from the hand mold. Thereby, a glove as the dip-molded article was produced.

### (Example 8)

The pH and the concentration of a polyisoprene latex composition were adjusted to have a solid content concentration in the range of 25 to 30% and have a pH in the range of 10 to 11.5 by adding 3% of a potassium hydroxide aqueous solution and soft water to the aforementioned commercially available polyisoprene latex composition under stirring. Subsequently, a dispersion liquid including the inorganic particles (B) in the type and the blending amount shown in Table 1, that is, 1.5 parts by mass of a titanium oxide dispersion liquid produced from the SiO₂-Al₂O₃ surface-treated titanium oxide by the aforementioned method, 1.5 parts by mass of 3-mercaptopropyltrimethoxysilane as the silane coupling agent, 0.5 parts of a sulfur dispersion liquid, 0.5 parts of a vulcanization accelerator ZDEC dispersion liquid, and 0.5 parts by mass of a zinc oxide dispersion liquid (manufactured by Aquaspersions Ltd.) were added to 100 parts by mass (in terms of solid content) of the NBR latex composition, and stirred at room temperature for 24 hours. Thereafter, aggregates and bubbles were removed from the obtained latex composition, the temperature of the latex composition was adjusted to 20 to 40 °C. Thereby, the latex composition for dip molding was obtained.

A glove as the dip-molded article was produced in the same manner as Examples 1 to 7, except that the thus obtained latex composition for dip molding was used instead of the latex compositions for dip molding of Examples 1 to 7.

### (Comparative Example 1)

A glove as the latex composition for dip molding and the dip-molded article was produced in the same manner as Example 1, except that the silane coupling agent was not included.

### (Comparative Example 2)

A glove as the latex composition for dip molding and the dip-molded article was produced in the same manner as Example 5, except that: the silane coupling agent was not included; and the titanium oxide dispersion liquid made of surface-untreated titanium oxide was used instead of the titanium oxide dispersion liquid made of SiO₂-Al₂O₃ surface-treated titanium oxide used in Example 5.

### (Comparative Example 3)

A glove as the latex composition for dip molding and the dip-molded article was produced in the same manner as Example 1, except that: the silane coupling agent was not included; the titanium oxide dispersion liquid made of surface-untreated titanium oxide was used instead of the titanium oxide dispersion liquid made of SiO₂-Al₂O₃ surface-treated titanium oxide used in Example 1; and 1.0 parts by mass of a sulfur dispersion liquid, 0.7 parts by mass of a vulcanization accelerator ZDEC dispersion liquid, and 1.2 parts by mass of a zinc oxide dispersion liquid (manufactured by Aquaspersions Ltd.) were further added.

### (Comparative Example 4)

A glove as the latex composition for dip molding and the dip-molded article was produced in the same manner as Example 6, except that: the silane coupling agent was not included; and the titanium oxide dispersion liquid made of surface-untreated titanium oxide was used instead of the titanium oxide dispersion liquid made of SiO₂-Al₂O₃ surface-treated titanium oxide used in Example 6.

### (Comparative Example 5)

A glove as the latex composition for dip molding and the dip-molded article was produced in the same manner as Example 8, except that: the silane coupling agent was not included; and the titanium oxide dispersion liquid made of surface-untreated titanium oxide was used instead of the titanium oxide dispersion liquid made of SiO₂-Al₂O₃ surface-treated titanium oxide used in Example 8.

### 2. Evaluation of characteristics of the dip-molded article

The evaluation of various characteristics of the obtained dip-molded articles was performed as below. The dip-molded article used for evaluation was prepared by demolding the molded article from the mold and then controlling the temperature and the humidity for over 1 day.

### (1) Total amount of inorganic particles in the compound composition

The gist of the present invention is to aim the improvement of physical strength and durability by bonding the inorganic particles existing in the dip-molded article with the organic polymer forming the dip-molded article by covalent bonding. The effect is assumed to be enhanced by causing more number of the inorganic particles existing in the dip-molded article to be bonded with the organic polymer. However, it is difficult in terms of accuracy to actually measure the degree of bonding between the inorganic particles and the organic polymer by an experimental technique. Thus, in order to simply obtain the bonding ratio between the inorganic particles and the organic polymer, the total amount of mixed parts by mass of a dispersion liquid having the properties produced by dispersion of an inorganic particle component to be mixed was determined as a calculation estimated value. Specifically, the sum of the amounts of the inorganic compounds included in the dispersion liquid having the corresponding inorganic particles in the present invention, namely, the sulfur dispersion liquid, the zinc oxide dispersion liquid, the titanium oxide dispersion liquid and/or the aluminum oxide dispersion liquid, which were used in Examples 1 to 8 and Comparative Examples 1 to 5 was determined as the calculation estimated value of the total amount of the inorganic particles. The results are shown in Table 1 below.

### (2) Ratio of the inorganic particles covalently bonded with the organic polymer network

As described above, it is difficult to accurately measure the ratio of the inorganic particles covalently bonded with and taken into the organic polymer network. Thus, the aforementioned ratios of the latex compositions for dip molding produced by Examples 1 to 8 and Comparative Examples 1 to 5 were obtained by calculation using an index of reactivity to be described below.

It is publicly known that the reactivity in formation of covalent bonding with a silanol group derived from the silane coupling agent varies depending on the material of the surface of the inorganic particles. The reactivity was calculated by taking the reactivity of the silanol group to silica and the reactivity of the silanol group to aluminum oxide material as 1.0 and the reactivity of the silanol group to titanium oxide and the reactivity of the silanol group to zinc oxide material as 0.2. The reactivity between the reactive organic functional group X and the organic polymer was calculated as 1.0. It is a matter of course that the reactivity in the system including no silane coupling agent was calculated as 0 (nil). For each type of the inorganic particles to be mixed, parts by mass of the inorganic particles was multiplied by the aforementioned reactivity, and the total sum thereof was multiplied by the total amount of the inorganic particles in the compound composition to determine the result as the ratio of the inorganic particles covalently bonded with the organic polymer network. The results are shown in Table 1 below.

### (3) Physical strength and color tone of the dip-molded article

A glove produced according to each of Examples 1 to 8 and Comparative Examples 1 to 5 was subjected to humidity control at a temperature of 25 °C and a humidity of 55RH% for 24 hours, followed by measuring the physical strength according to ASTM D412. Specifically, a specimen was prepared by punching a film of the glove using DieC manufactured by DUMBBELL CO., LTD. The specimen was pulled at a tensile speed of 500 mm/min, to measure the stress at the 300% elongation, stretchability, tensile strength, and tear strength. The color tone of the glove was measured using a UV-VIS spectrometer manufactured by Hunter Associates Laboratory, Inc. The results are respectively shown in Table 1 below.

### (4) Ethanol resistance

After the glove produced according to each of Examples 1 to 8 and Comparative Examples 1 to 5 was punched to obtain the specimen using DieC manufactured by DUMBBELL CO., LTD, and the physical strength of the specimen was measured according to ASTM D412, the specimen was immersed in ethanol for 30 minutes. Thereafter, the specimen was taken out from ethanol to remove ethanol by kimwipes, and dried with wind for 1 minute, to measure the physical strength of the specimen after immersion in ethanol according to ASTM D412. The calculation was made as: ethanol resistance = physical strength after immersion in ethanol / physical strength before immersion in ethanol × 100 (%). The results are shown in Table 1 below.

### (5) Fatigue durability

The evaluation of the fatigue durability (fitting durability) of the glove produced according to each of Examples 1 to 8 and Comparative Examples 1 to 5 was performed by the method described in Japanese Patent No. 6775678 (MIDORI ANZEN CO., LTD.). A type 1 dumbbell specimen according to JIS K6251 was cut out from the glove that is a dip-molded article having a film thickness of about 0.05 mm, and immersed in an artificial sweat (including 20 g of sodium chloride, 17.5 g of ammonium chloride, 17.1 g of lactic acid, and 5.0 g of acetic acid per 1 liter, and adjusted by a sodium hydroxide aqueous solution to have a pH of 4.7), to evaluate the fatigue durability. That is, a dumbbell specimen having a length of 120 mm was clamped by a fixed chuck and a movable chuck at a position located 15 mm from each of the both ends, and immersed to the part located 60 mm from the bottom side of the fixed chuck in the artificial sweat. The movable chuck was moved to a minimum position (i.e., relaxation state) at 147 mm (123%) and held for 11 seconds, and then moved for 1.8 seconds to return to the minimum position, via the maximum position (i.e., stretched state) at which the specimen has a length of 195 mm (163%). Taking this movement as one cycle, a cycle test was performed. The time for one cycle was 12.8 seconds, and the time was multiplied by the number of the cycles until the specimen was broken to obtain the time (minute) on the fatigue durability. The results are shown in Table 1 below.

### (6) 4% acetate elution test (amount of evaporation residue)

A glove produced by each of Examples 1 to 8 and Comparative Examples 1 to 5 was immersed in 4% acetate at 60 °C for 30 minutes, to then measure the amount of evaporation residue in the leached solution, according to the standards and the test method set forth in "3. Apparatus, or containers and packaging, made of rubber" according to Public Notice of the Ministry of Health and Welfare, No. 370, 1959 (Specifications and Standards for Food, Food Additives, Etc.) in conformity to Food Sanitation Act, Article 18. The results are shown in Table 1 below.

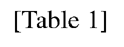

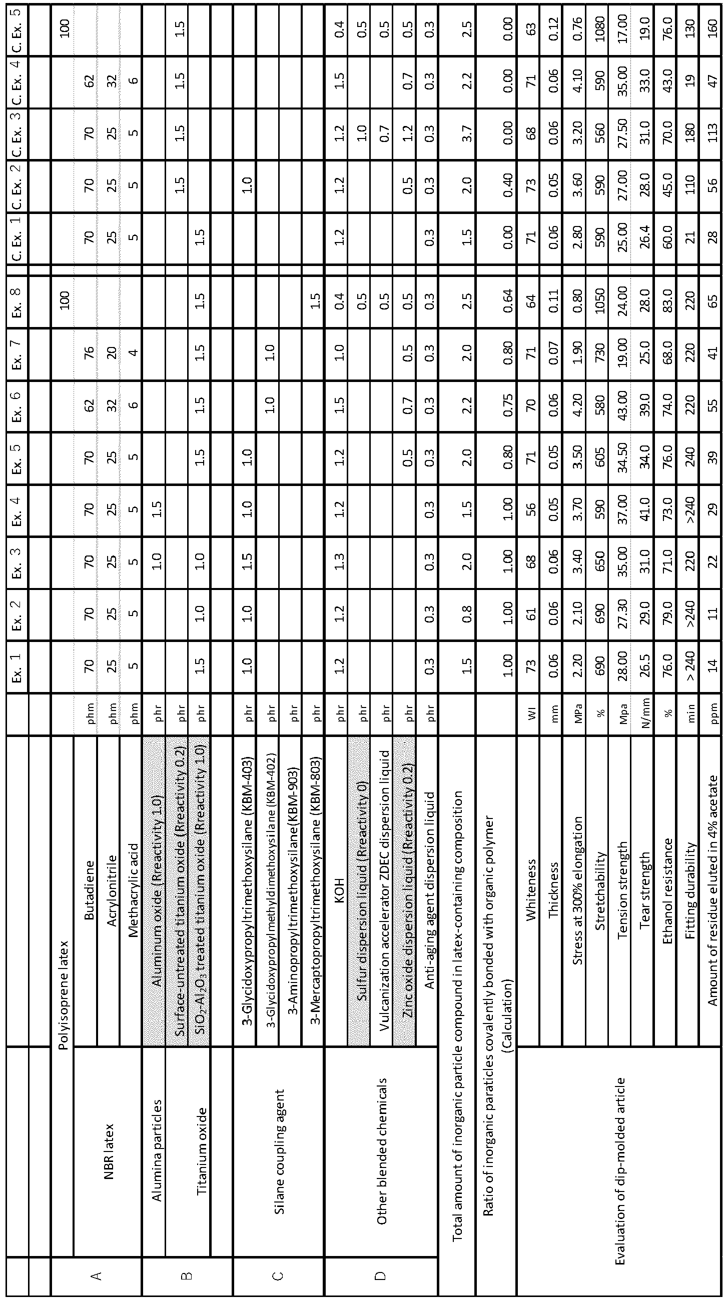

As is obvious from the results in Table 1, it can be confirmed that the physical strength, the flexibility, the ethanol resistance, and the fatigue durability of the dip-molded article are improved by the inorganic particles and the organic polymer in the dip-molded article being bonded by the covalent bonding.

Comparison of Example 1 and Comparative Example 1 can confirm the influence on the quality of the product by the presence or absence of the silane coupling agent. It is assumed that the inorganic particles and the organic polymer are cross-linked by the covalent bonding via the silane coupling agent to improve the ethanol resistance and the fatigue durability.

Comparison of Example 3 and Comparative Example 2 can confirm the difference of the effect between an SiO₂-Al₂O₃ surface-treated titanium oxide that is highly reactive with the silane coupling agent and a surface-untreated titanium oxide that is less reactive with the silane coupling agent. The SiO₂-Al₂O₃ surface-treated titanium oxide highly reactive with the silane coupling agent shows a more favorable result in the strength and the fatigue durability.

Comparison of Example 1 and Comparative Example 3 can confirm the difference between the crosslinking form caused by the SiO₂-Al₂O₃ surface-treated titanium oxide highly reactive with the silane coupling agent and the crosslinking form caused by general sulfur and vulcanization accelerator. Both the crosslinking forms have an almost equal tensile strength, but the former crosslinking form shows a lower stress at the 300% elongation and a greater stretchability. Further, it can be confirmed that the amount of the residue eluted in 4% acetate can be greatly reduced in the crosslinking form caused by the SiO₂-Al₂O₃ surface-treated titanium oxide highly reactive with the silane coupling agent. It shows that the combined and blended silane coupling agent and the SiO₂-Al₂O₃ surface-treated titanium oxide enables to produce the dip-molded article having soft texture, good stretchability, and sufficient strength.

Comparison of Example 6 and Comparative Example 4 can confirm the effect of the combination of the silane coupling agent and the highly-reactive SiO₂-Al₂O₃ surface-treated titanium oxide. Even in the mixture in which zinc oxide is blended to improve the strength, it can be confirmed that the fatigue durability is greatly improved and the strength is further increased by the formation of the covalent crosslinking between the inorganic particles and the organic polymer.

Comparison of Example 8 and Comparative Example 5 can confirm the effect of the combination of the silane coupling agent and the SiO₂-Al₂O₃ surface-treated titanium oxide that is highly reactive in the polyisoprene latex. Although it is necessary to additionally introduce sulfur crosslinking by the vulcanization accelerator to have a sufficient strength in the polyisoprene based material, it can be confirmed that the physical strength and the amount of the residue eluted in 4% acetate can be improved in the combination of the silane coupling agent and the highly-reactive SiO₂-Al₂O₃ surface-treated titanium oxide.

It can be also confirmed that the physical strength, the flexibility, the ethanol resistance, and the fatigue durability of the dip-molded article are sufficiently improved in Example 2 with the reduced amount of the SiO₂-Al₂O₃ surface-treated titanium oxide compared with Example 1, and in Example 3 and Example 4 using aluminum oxide as an alternative to a part or the entire SiO₂-Al₂O₃ surface-treated titanium oxide.

As described above, it was found that the physical strength, the fatigue durability, the ethanol resistance, and the amount of the residue eluted in 4% acetate of the dip-molded article can be effectively improved by reacting the silane coupling agent with the surface of the inorganic particles having a high reactivity, and causing the inorganic particles to be covalently-bonded with the organic polymer network. It can also be found that this effect correlates with the degree of covalent bonding of the inorganic particles with the organic polymer network. The gist of the present invention has been achieved based on these new points of view.

## Claims

1. A latex composition for dip molding, comprising a polymer, inorganic particles, and a silane coupling agent,
the inorganic particles being alumina, or titanium oxide that has a surface on which at least one of silica, zirconia, and alumina is located.

2. The latex composition for dip molding according to claim 1, wherein
the inorganic particles are titanium oxide that has a surface on which at least one of silica, zirconia, and alumina are located.

3. The latex composition for dip molding according to claim 2, wherein
a total amount of silica, zirconia, and alumina located on the surface of the titanium oxide is 0.1 to 10 mass% based on 100 mass% of the titanium oxide.

4. The latex composition for dip molding according to claim 1, wherein
the inorganic particles are alumina, or titanium oxide that has a surface on which alumina is located, and
the polymer comprises a structural unit derived from an ethylenically unsaturated carboxylic acid monomer.

5. The latex composition for dip molding according to claim 1, wherein
an average particle size of the inorganic particles is 0.1 to 3.0 µm.

6. The latex composition for dip molding according to claim 1, wherein
the polymer comprises at least one of polyisoprene rubber, natural rubber, chloroprene rubber, NBR, and SBR.

7. The latex composition for dip molding according to claim 6, wherein
the polymer is carboxylated NBR, and
the carboxylated NBR comprises 50 to 78 mass% of a structural unit derived from a conjugated diene monomer, 20 to 40 mass% of a structural unit derived from an ethylenically unsaturated nitrile monomer, and 2 to 10 mass% of a structural unit derived from an ethylenically unsaturated carboxylic acid monomer.

8. The latex composition for dip molding according to claim 1, wherein
the silane coupling agent comprises an epoxy group, an amino group, or a mercapto group.

9. A method for producing a dip-molded article, comprising:
producing a dip-molded article by subjecting the latex composition for dip molding according to any one of claims 1 to 8 to dip molding.

10. The method for producing a dip-molded article according to claim 9, wherein the dip-molded article is a glove.
